# EUROPÄISCHE PATENTSCHRIFT

(11) **EP 4 184 621 B1**
(45) Veröffentlichungstag und Bekanntmachung des Hinweises auf die Patenterteilung: **11.06.2025**
(21) Anmeldenummer: 22209297.5
(22) Anmeldetag: 05.01.2017
(51) Int. Cl.: H01M 8/0208, H01M 8/021, H01M 8/0215, H01M 8/0228, C23C 28/04, C23C 28/00, C25B 9/65, C25B 9/70, C25B 9/73

(54) **POLYMERELEKTROLYTBRENNSTOFFZELLE UND ELEKTROLYSEUR**
POLYMER ELECTROLYTE MEMBRANE FUEL CELL AND ELECTROLYZER
PILE À COMBUSTIBLE À MEMBRANE ÉLECTROLYTE POLYMÈRE ET ÉLECTROLYSEUR

(30) Priorität: 17.02.2016 DE 102016202372
(43) Veröffentlichungstag der Anmeldung: 24.05.2023
(62) Teilanmeldung aus: 17702515.2
(73) Patentinhaber: Schaeffler Technologies AG & Co. KG, 91074 Herzogenaurach (DE)
(72) Erfinder: DOBRENIZKI, Ladislaus, 91315 Höchstadt (DE); HOSENFELDT, Tim, 90480 Nürnberg (DE); MUSAYEV, Yashar, 90425 Nürnberg (DE); REPENNING, Detlev, 21465 Reinbeck (DE)

(56) Entgegenhaltungen:
- WO-A1-2009/108102
- DE-A1- 10 230 395
- DE-A1- 102010 026 330
- US-A1- 2008 057 371

## Beschreibung

Die Erfindung betrifft eine Polymerelektrolytbrennstoffzelle oder einen Elektrolyseur umfassend mindestens eine Bipolarplatte, wobei die Bipolarplatte umfassend ein metallisches Substrat und ein zumindest in Teilbereichen der Oberfläche des Substrats aufgebrachtes Schichtsystem ausgebildet ist, wobei das Schichtsystem umfassend eine Deckschicht und ein Unterlagenschichtsystem ausgebildet ist.

Elektrochemische Systeme wie bspw. Brennstoffzellen, insbesondere Polymerelektrolytbrennstoffzellen, und leitfähige, stromabnehmende Platten für derartige Brennstoffzellen und Elektrolyseure sowie Stromabnehmer in galvanischen Zellen und Elektrolyseuren sind bekannt.

Ein Beispiel hierfür sind die Bipolar- oder Monopolarplatten in Brennstoffzellen, insbesondere in einer Sauerstoffhalbzelle. Die Bipolar- oder Monopolarplatten sind in Form von Kohlenstoffplatten (z.B. Graphoilplatten) ausgebildet, die als wesentlichen Bestandteil Kohlenstoff enthalten. Diese Platten neigen zur Brüchigkeit und sind vergleichsweise dick, sodass sie ein Leistungsvolumen der Brennstoffzelle wesentlich mindern. Ein weiterer Nachteil ist ihre mangelnde physikalische (z.B. thermomechanische) und/oder chemische und/oder elektrische Stabilität.

Ebenso bekannt ist die Herstellung der stromabnehmenden Platten der Brennstoffzelle aus metallischen (insbesondere austenitischen) Edelstählen. Der Vorteil dieser Platten liegt in einer erzielbaren Dicke der Platten von weniger als 0,5 mm. Diese Dicke ist anzustreben, damit sowohl ein Bauraum als auch ein Gewicht der Brennstoffzelle so gering wie möglich gehalten werden kann. Problematisch ist bei diesen Platten, dass Oberflächenoxide bei Betrieb der Brennstoffzelle gebildet werden, sodass ein Oberflächenwiderstand unzulässig erhöht wird und/oder ein elektrochemischer Zerfall (wie beispielsweise Korrosion) eintritt.

Aus den Offenlegungsschriften DE 10 2010 026 330 A1, DE 10 2013 209 918 A1, DE 11 2005 001 704 T5 und DE 11 2008 003 275 T5 geht zur Erzielung der Anforderung z.B. für den Einsatz von Bipolarplatten von Brennstoffzellen die Beschichtung von austenitischen Edelstählen als Träger mit einer Goldschicht hervor, welche in einem Bandbereich von bis zu 2 nm liegt. Dieser Anforderungslösung obliegen gleich mehrere Nachteile. So ist beispielsweise eine, wenn auch nur 2 nm dicke Goldschicht für Massenanwendungen immer noch zu teuer. Ein wesentlich größerer Nachteil ist in einer Grundeigenschaft des chemischen Elementes Gold zu sehen. Gold ist edler als das Trägermaterial als nicht rostender austenitischer Stahl (Edelstahl) und erwirkt dadurch unter ungünstigen Betriebsbedingungen in den Brennstoffzellen eine Auflösung des Trägers (z.B. Lochfraß- bzw. Pittingkorrosion), die eine Reduzierung der Lebensdauer zur Folge hat. In insbesondere chloridhaltiger Umgebung (z.B. Aerosolen) ist die Korrosion nicht zu verhindern.

Insbesondere ist ein weiterer Nachteil, dass Gold für Hochlastanwendungen z.B. bei Elektrolysebedingungen oberhalb 1500 mV Standardwasserstoffeinheit sowohl in saurer als auch basischer Umgebung nicht stabil ist.

Aus dem Stand der Technik bekannt sind ebenso Schichten auf dem Träger in Form so genannter Hartstoffschichten auf Nitrid- bzw. Carbidbasis. Ein Beispiel hierfür ist Titannitrid, das allerdings im Betrieb einer Brennstoffzelle zur Ausbildung oxidischer Metallkomplexe bis hin zu geschlossenen Oberflächenschichten neigt. Infolgedessen steigt der Oberflächenwiderstand wie auch beim Edelstahl auf hohe Werte. Verfahren zur Beschichtung mit Chromnitrid oder Chromcarbonitrid gehen beispielsweise aus den Patentschriften DE 199 37 255 B4 und EP 1273060 B1 und der Offenlegungsschrift DE 100 17 200 A1 hervor.

Die Hartstoffschichten weisen je nach Zusammensetzung sehr gute Betriebseigenschaften (bspw. Widerstand gegen Korrosion, Abriebfestigkeit, hohe Konturtreue) auf, bergen jedoch das Risiko zur anodischen Auflösung, wenn sich unter ungünstigen Betriebsbedingungen in der Brennstoffzelle Konzentrationsketten ausbilden. Diese anodische Auflösung tritt dann in Erscheinung, wenn bei inneren elektrochemischen Kurzschlüssen in der Brennstoffzelle, wie z.B. bei der Ausbildung eines Wasserfilmes zwischen einer aktiven Elektrode einer Membran-Elektroden-Einheit der Brennstoffzelle und der Bipolarplatte ein so genanntes Lokalelement bzw. ein unerwartetes und unerwünschtes Reaktionselement entsteht.

Ebenfalls bekannt sind Mehrfachbeschichtungen auf Basis von Nitriden mit sehr dünnen Gold- oder Platinschichten. Somit können bei Schichtdicken der Edelmetalle von über 2 µm zufriedenstellende Betriebsergebnisse für eine Brennstoffzelle erzielt werden. Das grundlegende Problem der Auflösung bleibt bei hohen anodischen Potenzialen bestehen. Die Schichtdicke gewährleistet eine nahezu porenfreie Decklage und mindert somit das Risiko der Pittingkorrosion.

Weiterhin sind so genannte dimensionsstabile Anoden bekannt. Hier werden mit Hilfe von Refraktärmetallen einphasige oder mehrphasige Oxide mit Rutheniumoxid und/oder Iridiumoxid gebildet. Diese Art der Schicht ist zwar sehr stabil, bildet aber zu hohe elektrische Widerstände aus. Entsprechendes liegt auch vor, wenn eine Oberfläche des Trägers, im Allgemeinen aus einem Edelmetall hergestellt, mit Iridium dotiert wird.

Die DE 10 230 395 A1 beschreibt ein leitfähiges Bauteil für elektrochemische Zellen, insbesondere zur Verwendung als bipolare Platte in einer Brennstoffzelle. Das Bauteil umfasst ein Metallteil, das mit einer dotierten Diamantbeschichtung und/oder einer dotierten diamantähnlichen Beschichtung versehen ist. Als Dotierelemente sind dabei B, Sc, Y, Nb, V, Fe, Cr, Ni, Mn, Zr, Mo, Ta, Hf, Pt, Pd, Re, Ru, Rh, Ir, Ag, offenbart.

Die WO 2009 108 102 A1 offenbart eine Elektrode für eine elektrochemische Zelle. Die Elektrode umfasst eine elektrisch leitfähiges Substrat und eine elektrisch leitfähige, korrosionsbeständige Beschichtung in Form eines Karbids oder Nitrids.

Somit sind an die in diesen beispielhaft genannten elektrochemischen Systemen, insbesondere zur Energiewandlung, ausgebildeten metallischen Träger bzw. eine Bipolarplatte für eine PEM-Brennstoffzelle oder einen Elektrolyseur folgende Anforderungen zu stellen:
- Hohe Korrosionsfestigkeit gegenüber ein sie umgebendes Medium, und/oder
- hohe Belastbarkeit gegenüber anodischen bzw. kathodisch polarisierenden Belastungen,
- geringer Oberflächenwiderstand einer einem Elektrolyten zugewandten Oberfläche des Trägers bzw. seiner Beschichtung, und
- niedrige Produktionskosten des Trägers, insbesondere bspw. eines elektrisch leitenden Konduktors in Form von Bipolarplatten für die Anwendung von Brennstoffzellen für die mobile Anwendung.

Somit ist es die Aufgabe der vorliegenden Erfindung eine verbesserte Schicht bzw. ein verbessertes Schichtsystem ganz allgemein für einen Energiewandler in Form einer Polymerelektrolytbrennstoffzelle oder eines Elektrolyseurs bereitzustellen.

Die Aufgabe wird erfindungsgemäß durch einePolymerelektrolytbrennstoffzelle oder einen Elektrolyseur nach Anspruch 1 gelöst.

Die Polymerelektrolytbrennstoffzelle oder der Elektrolyseur umfasst dabei mindestens eine Bipolarplatte, wobei die Bipolarplatte umfassend ein metallisches Substrat und ein zumindest in Teilbereichen der Oberfläche des Substrats aufgebrachtes Schichtsystem ausgebildet ist. Das Schichtsystem umfasst eine Deckschicht und ein Unterlagenschichtsystem, wobei das Unterlagenschichtsystem mindestens eine erste Unterlagenschicht in Form einer metallischen Legierungsschicht umfassend die chemischen Elemente Titan und Niob aufweist, und wobei das Unterlagenschichtsystem eine zweite Unterlagenschicht aufweist umfassend mindestens ein chemisches Element aus der Gruppe Titan, Niob, Hafnium, Zirkonium, Tantal und weiterhin mindestens ein nichtmetallisches Element aus der Gruppe Stickstoff, Kohlenstoff, Bor, Fluor. Dabei ist die zweite Unterlagenschicht zwischen der ersten Unterlagenschicht und der Deckschicht angeordnet. Die Deckschicht besteht aus einer homogenen oder heterogenen festen metallischen Lösung oder Verbindung besteht, die entweder
ein erstes chemisches Element aus der Gruppe der Edelmetalle in Form von Iridium enthält und weiterhin zumindest ein weiteres nichtmetallisches chemisches Element enthält aus der Gruppe umfassend Stickstoff, Kohlenstoff, Bor, Fluor, Wasserstoff oder ein erstes chemisches Element aus der Gruppe der Edelmetalle in Form von Iridium und ein zweites chemisches Element aus der Gruppe der Edelmetalle in Form von Ruthenium enthält und weiterhin zumindest ein weiteres nichtmetallisches chemisches Element enthält aus der Gruppe umfassend Stickstoff, Kohlenstoff, Bor, Fluor, Wasserstoff.

Vorteilhafte Ausgestaltungen mit zweckmäßigen und nicht-trivialen Weiterbildungen der Erfindung sind in den Unteransprüchen angegeben.

Die Deckschicht ist elektrisch leitend und elektrokatalytisch aktiv sowie korrosionsschützend ausgebildet.

Unter einer homogenen metallischen Lösung (Typ 1) wird verstanden, dass die genannten nichtmetallischen chemischen Elemente im Metallgitter so gelöst sind, dass sich der Gittertyp des Wirtsmetalls oder der Wirtsmetalllegierung im Wesentlichen nicht ändert.

Unter einer homogenen metallischen Verbindung (Typ 2) wird verstanden, dass bei einer höheren Konzentration der gelösten nichtmetallischen chemischen Elemente sich ein neuer Gittertyp ausbildet wie z. B. bei der Bildung der stöchiometrischen Verbindung Iridiumcarbid. Man spricht hier auch von homogenen Phasen.

Unter einer heterogenen metallischen Lösung oder Verbindung wird verstanden, dass entweder die unterschiedlichen Phasen (Typ1 und Typ2) nebeneinander vorliegen oder dass neben den metallhaltigen Phasen auch eines der nichtmetallischen chemischen Elemente in einer Mischphase elementar vorliegt. Beispielweise kann so je nach Ausprägung des Phasendiagramms der binären oder multinären Systems elementarer Kohlenstoff neben der alpha-Phase (Typ1), also beispielweise alpha - Ruthenium, vorliegen oder beispielsweise Kohlenstoff neben Iridiumcarbid.

Je nach Abscheidebedingungen kann die erfindungsgemäße Schicht im thermodynamischen Sinn metastabil oder stabil sein.

Die Deckschicht ist weiterhin insbesondere dadurch gekennzeichnet, dass die Edelmetalle in Form von Iridium oder in Form von Ruthenium und Iridium mit den nichtmetallischen chemischen Elementen feste stöchiometrische Verbindungen ausbilden.

Es hat sich gezeigt, dass mit einer kohlenstoffhaltigen Schicht, somit durch den Einsatz des Metalloids bzw. nichtmetallischen chemischen Elements Kohlenstoff, die Leitfähigkeit der Deckschicht höher ist als bei Gold und dass zugleich ihre Oxidationsstabilität in einer sauren Lösung deutlich über einer Spannung von 2000 mV einer Standardwasserstoffelektrode liegt. Gemessene spezifische elektrische Widerstände liegen je nach Ausführungsform unter 5 mΩ cm⁻² (unter standardisierten Bedingungen). Im Vergleich hierzu liegt der spezifische elektrische Widerstand von Gold bei ca. 10 mΩ cm⁻² bei Raumtemperatur.

Ein weiterer wichtiger Vorteil ist, dass das Iridium nicht bei Spannungen oberhalb des Wertes E = 2,04 - 0,059 Ig pH- -0,0295 Ig (IrO₄)²⁻
oxidiert und in Lösung geht. In der festen Lösung wird also das niederwertige Iridium soweit stabilisiert, dass die sonst übliche Oxidation bei ca. 1800 mV in 1 mol/l (1N-konzentrierter) Schwefelsäure (H₂SO₄) nicht mehr stattfindet. Maßgabe für die Stabilisierung ist der Gewinn an freier partieller Mischenergie ΔG_{Misch} der festen Lösungen bzw. Verbindungen.

Die Deckschicht weist bevorzugt eine Schichtdicke von mindestens 1 nm bis maximal 10 nm auf.

Beispielsweise ergibt sich bei einer Schichtdicke von ca. 10 nm bei einer Verwendung von (Ir,Nb)C₁₋ₓ nur 4 µg Ir pro cm² der Deckschicht. Für eine 10 nm dicke Goldschicht müssen mehr als 20 µg Gold pro cm² eingesetzt werden. Der Vorteil der Deckschicht im Vergleich zu einer Goldschicht ist die hohe Oxidationsstabilität bis zu Spannungen weit oberhalb 2000 mV gegenüber einer Standardwasserstoffelektrode in 1N-konzentrierter Schwefelsäure.

Mit einer Deckschicht, welche carbidische Verbindungen aufweist, ist die Stabilität von beispielsweise Iridium-haltigen dimensionsstabilen Anoden-Elektroden deutlich zu steigern.

Die Deckschicht weist bevorzugt weiterhin mindestens ein Metall aus der IV. und/oder der V. Nebengruppe des Periodensystems der chemischen Elemente auf. Der Vorteil bei Nutzung dieser Metalle - entweder elementar oder in Form von Verbindungen - liegt darin, dass sie unter Korrosionsbedingungen selbstschützende, stabile und leitfähige Oxide ausbilden.

Das mindestens eine nichtmetallische chemische Element ist vorzugsweise in einer Konzentration im Bereich von 0,1 At.-% bis 65 At.-%, insbesondere von 10 bis 30 At.-% in der Schicht vorhanden. Insbesondere ist das nichtmetallische chemische Element Kohlenstoff im Konzentrationsbereich von 10 bis 25 At.-% in der Schicht enthalten.

Insbesondere hat sich eine erfindungsgemäße Schicht bewährt, die
a) mehr als 35 At.-% Iridium und weiterhin Kohlenstoff umfasst; oder
b) mehr als 35 At.-% Iridium und weiterhin Kohlenstoff und Wasserstoff umfasst; oder
c) mehr als 35 At.-% Iridium und weiterhin Kohlenstoff und Fluor, optional weiterhin Wasserstoff, umfasst; oder
d) in Summe mehr als 35 At.-% Iridium und Ruthenium und weiterhin Kohlenstoff umfasst; oder
e) in Summe mehr als 35 At.-% Iridium und Ruthenium und weiterhin Kohlenstoff und Wasserstoff umfasst; oder
f) in Summe mehr als 35 At.-% Iridium und Ruthenium und weiterhin Kohlenstoff und Fluor, optional weiterhin Wasserstoff, umfasst.

Der Wasserstoff bzw. optional vorhandene Wasserstoff gemäß den Schichtzusammensetzungen b), c), e) und f) ist dabei lediglich in Spuren vorhanden.

Weiterhin kann die Deckschicht mindestens ein chemisches Element aus der Gruppe der unedlen Metalle enthalten. Das mindestens eine chemische Element aus der Gruppe der unedlen Metalle ist dabei bevorzugt durch Aluminium, Eisen, Nickel, Kobalt, Zink, Cer oder Zinn gebildet und/oder im Konzentrationsbereich von 0,01 bis 65 At.-%, insbesondere von 0,01 bis 5 At.-%, in der Deckschicht enthalten.

In einer weiteren vorteilhaften Ausgestaltung der Deckschicht weist diese zumindest ein chemisches Element aus der Gruppe der Refraktärmetalle, insbesondere Titan und/oder Zirkonium und/oder Hafnium und/oder Niob und/oder Tantal, auf. Es hat sich gezeigt, dass durch den Zusatz der Refraktärmetalle zusätzlich anteilsweise während der Elektrolyse entstehendes H₂O₂ und Ozon gesteuert werden.

Die Deckschicht umfasst bevorzugt feste stöchiometrische Verbindungen und ist vorzugsweise mit dem Zusatz von Refraktärmetallen als multinäre Verbindung ausgebildet.

Die Deckschicht umfassend mindestens ein Refraktärmetall weist insbesondere in einem Temperaturbereich von 0 bis ca. 200 °C eine hohe Leitfähigkeit und eine hohe Korrosionsbeständigkeit auf. Somit sind mit multinären festen Iridium- und/oder Ruthenium-haltigen Schichten herausragende Eigenschaften für einen dauerfesten Einsatz in z. B. Brennstoffzellen hergestellt.

Ein weiterer Vorteil ergibt sich aus der Beschichtung von elektrischen Konduktoren, wie insbesondere metallischen Bipolarplatten, unabhängig davon, ob der elektrische Konduktor wie z.B. eine Bipolarplatte für Niedertemperatur-Polymerelektrolytbrennstoffzellen oder für Hochtemperatur-Polymerelektrolytbrennstoffzellen ausgebildet ist. Der besondere Vorteil liegt darin, dass die Deckschicht mit einer Dichte zwischen 10-13 gcm⁻³ eine fast nur halb so hohe Dichte aufweist im Vergleich zu einem reinen Edelmetall. Somit kann der Einsatz teurer Edelmetalle und/oder seiner Verbindungen reduziert werden, insbesondere durch die Bildung multinärer Verbindungen mit den anderen Elementen.

Das mindestens eine chemische Element aus der Gruppe der Refraktärmetalle ist bevorzugt im Konzentrationsbereich von 0,01 bis 65 At.-%, insbesondere von 0,01 bis 5 At.-%, in der Deckschicht enthalten.

Sofern das mindestens eine chemische Element aus der Gruppe der unedlen Metalle in Form von Zinn vorliegt, so sind dieses und das mindestens eine chemische Element aus der Gruppe der Refraktärmetalle zusammen im Konzentrationsbereich von 0,01 bis 65 At.-% insbesondere von 0,01 bis 5 At.-%, in der Deckschicht enthalten.

Es hat sich bewährt, wenn die Deckschicht weiterhin mindestens ein zusätzliches chemisches Element aus der Gruppe der Edelmetalle in einem Konzentrationsbereich von 0,01 bis 10 At.-% aufweist. Das chemische Element aus der Gruppe der Edelmetalle ist dabei Platin, Gold, Silber, Rhodium, Palladium.

Es hat sich bewährt, wenn alle chemischen Elemente aus der Gruppe der Edelmetalle Platin, Gold, Silber, Rhodium, Palladium, d.h. zusammen mit Iridium und Ruthenium, im Konzentrationsbereich von 35 bis 99 At.-% in der Deckschicht enthalten sind.

Der Korrosionsschutz auf metallischen Trägern, wie aus Stählen, insbesondere Edelstählen, oder Titan, wird dadurch weiter verbessert, indem die Deckschicht auf ein zwischen dem Träger und der Deckschicht ausgebildetes Unterschichtsystem aufgebracht wird. Dieses ist besonders dann von Vorteil, wenn korrosive Umgebungsmedien vorhanden sind, insbesondere wenn die Korrosionsmedien chloridhaltig sind.

Eine Unteroxidation, d.h. eine Oxidation der Oberfläche eines Trägers mit einer auf dieser Oberfläche aufgebrachten Schicht, führt normalerweise zur Delamination aufliegender Edelmetallschichten.

Das Schichtsystem für eine Bipolarplatte einer Polymerelektrolytbrennstoffzelle oder eines Elektrolyseurs, umfasst daher die Deckschicht und das Unterlagenschichtsystem.

Das Unterlagenschichtsystem weist eine erste Unterlagenschicht in Form einer metallischen Legierungsschicht auf umfassend die chemischen Elemente Titan und Niob, insbesondere 20 - 50 Gew.-% Niob und Rest Titan.

Das Unterlagenschichtsystem weist eine zweite Unterlagenschicht auf umfassend mindestens ein chemisches Element aus der Gruppe Titan, Niob, Zirkonium, Hafnium, Tantal und weiterhin mindestens ein nichtmetallisches Element aus der Gruppe Stickstoff, Kohlenstoff, Bor, Fluor.

Das Unterlagenschichtsystem weist in einer besonders bevorzugten Ausführungsform eine zweite Unterlagenschicht umfassend die chemischen Elemente
a) Titan, Niob und weiterhin Kohlenstoff und Fluor auf, oder
b) Titan, Niob und weiterhin Stickstoff auf, ist insbesondere aus (Ti₆₇Nb₃₃)N_{0,8-1,1} gebildet.

Die zweite Unterlagenschicht ist zwischen der ersten Unterlagenschicht und der Deckschicht angeordnet.

Die zweite Unterlagenschicht kann weiterhin bis zu 5 At.-% Sauerstoff enthalten.

Der weitere Vorteil in der Wahl einer multinären Verbindung für die Deckschicht liegt darin, dass sie unter hohen anodischen Spannungen bis zu 3500 mV gegenüber einer Normalwasserstoffelektrode oder in Gegenwart von Wasserstoffperoxid bzw. Ozon zwar Oxide ausbildet, allerdings sind diese elektrisch leitfähig und selbst heilend. Sie neigen zur Bildung inerter und leitfähiger Mischoxid-Schichten mit der zweiten Unterlagenschicht.

Die Bipolarplatte umfasst ein metallisches Substrat und ein zumindest in Teilbereichen der Oberfläche des Substrats aufgebrachtes Schichtsystem. Insbesondere ist das Schichtsystem auf einer oder beiden Seiten des plattenförmigen Substrats vollflächig aufgebracht. Das metallische Substrat ist insbesondere aus Stahl oder Titan, bevorzugt aus Edelstahl, gebildet. Eine Dicke des
Substrats beträgt bevorzugt weniger als 1 mm und ist insbesondere gleich 0,5 mm.

Eine erfindungsgemäße Polymerelektrolyt-brennstoffzelle, umfassend mindestens eine solche Bipolarplatte, hat sich als besonders vorteilhaft hinsichtlich der elektrischen Werte und der Korrosionsbeständigkeit erwiesen. Eine solche Brennstoffzelle weist daher eine hohe Lebensdauer von mehr als 10 Jahren oder mehr als 5000 Kfz-Betriebsstunden auf.

Mit einem erfindungsgemäßen Elektrolyseur, der mit umgekehrtem Wirkprinzip im Hinblick auf eine Brennstoffzelle arbeitet und mit Hilfe elektrischen Stroms eine chemische Reaktion, also eine Stoffumwandlung, herbeiführt, sind vergleichbar hohe Lebensdauern erreichbar. Insbesondere handelt es sich bei dem Elektrolyseur um einen zur Wasserstoffelektrolyse geeigneten.

Vorteilhafterweise ist eine Dicke der Deckschicht von weniger als 10 nm ausreichend, um vor einer widerstandserhöhenden Oxidation der zweiten Unterlagenschicht zu schützen. Zur Ausbildung eines gesicherten Korrosionsschutzes, sind Teilschichten des Unterlagenschichtsystems aus zumindest einem Refraktärmetall ausgebildet, welche zumindest zweilagig auf dem Stahl, insbesondere Edelstahl, appliziert sind, und zwar zunächst als Metall- bzw. Legierungsschicht (= erste Unterlagenschicht) und dann als Metalloidschicht (= zweite Unterlagenschicht). Die mit Hilfe der Zweilagigkeit ausgebildete Doppelschicht unter der Deckschicht sorgt einerseits für eine elektrochemische Anpassung an ein Trägermaterial, also das Material, aus welchem der Träger ausgebildet ist, und andererseits wird Porenbildung auf Grund von Oxidations- und Hydrolyseprozessen ausgeschlossen.

Die elektrochemische Anpassung an das Trägermaterial ist notwendig, da sowohl die Metalloidschicht (= zweite Unterlagenschicht) als auch die die Deckschicht, sehr edel sind. Bei Porenbildung würden sich hohe Lokalelementpotentiale mit der Folge unzulässiger Korrosionsströme aufbauen. Die metallische erste Unterlagenschicht ist aus Titan und Niob gebildet, die unedler sind als das Trägermaterial in Form von Stahl, insbesondere Edelstahl, und reagieren zunächst bei Korrosionsvorgängen zu nicht löslichen Oxiden bzw. voluminösen teils gelartigen Hydroxoverbindungen dieser Refraktärmetalle. Hierdurch wachsen die Poren zu und schützen das Grundmaterial vor Korrosion. Der Vorgang stellt eine Selbstheilung des Schichtsystems dar.

Die zweite Unterlagenschicht in Form einer nitridischen Schicht dient als Wasserstoffbarriere und schützt somit das Substrat, insbesondere aus Edelstahl, der Bipolarplatte als auch die metallische erste Unterlagenschicht vor einer Wasserstoffversprödung.

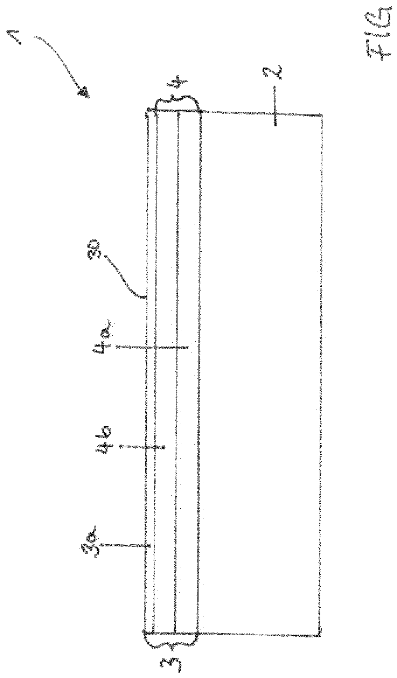

Weitere Vorteile, Merkmale und Einzelheiten der Erfindung ergeben sich aus der nachfolgenden Beschreibung bevorzugter Ausführungsbeispiele und der Figur. Die vorstehend in der Beschreibung genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Figur zeigt eine Bipolarplatte 1 umfassend ein Substrat 2 aus Edelstahl und ein vollflächig auf einer Seite des Substrats 2 aufgebrachtes Schichtsystem 3. Das Schichtsystem 2 umfasst eine Deckschicht 3a und ein Unterlagenschichtsystem 4 umfassend eine erste Unterlagenschicht 4a und eine zweite Unterlagenschicht 4b.

In einem ersten Ausführungsbeispiel ist ein metallisches Substrat 2 in Form eines Konduktors, hier für eine Bipolarplatte 1 einer Polymerelektrolytbrennstoffzelle zur Umsetzung von (reformiertem) Wasserstoff, aus einem Edelstahl, insbesondere aus einem so genannten authentischen Stahl mit sehr hoher bekannter Anforderung bzgl. Korrosionsbeständigkeit, z.B. mit der DIN ISO Werkstoffnummer 1.4404, hergestellt.

Mittels eines Beschichtungsverfahrens, beispielsweise einem vakuumbasierten Beschichtungsverfahrens (PVD), wird ein Schichtsystem 3 auf dem Substrat 2 der Bipolarplatte 1 ausgebildet, wobei das Substrat 2 in einem Verfahrensdurchgang zunächst mit einer ersten Unterlagenschicht 4a in Form einer 1,5 µm dicken Schicht, anschließend mit einer etwa gleich dicken zweiten Unterlagenschicht 4b in Form einer Titannitridschicht und abschließend mit einer Deckschicht 3a in Form einer 25 nm dicken Titan-Iridium-Nitrid-Schicht beschichtet wird. Die Deckschicht 3a entspricht einer einseitig offenen Schichtlage, da nur eine Deckschichtfläche einer weiteren Schicht, hier der zweiten Unterlagenschicht 4b, diese kontaktierend ausgebildet ist. Somit ist die freie Oberfläche 30 der Deckschicht 3a in einer Brennstofffzelle einem Polymerelektrolyten unmittelbar angrenzend angeordnet und ausgesetzt.

In einem zweiten Ausführungsbeispiel wird das metallische Substrat 2 für die Bipolarplatte 1 zunächst mit einer ersten Unterlagenschicht 4a in Form einer metallischen Legierungsschicht in einer Dicke von mehreren 100 nm beschichtet, wobei die metallische Legierungsschicht die Zusammensetzung Ti_{0.9} Nb_{0.1} aufweist. Anschließend erfolgt eine weitere Auftragung einer zweiten Unterlagenschicht 4b mit einer Dicke von weiteren mehreren 100nm der Zusammensetzung Ti_{0.9} Nb_{0.1} N₁₋ₓ. Darauf wird eine Deckschicht 3a in der Dicke von mehreren nm in der Zusammensetzung (Ti,Nb-Ir)N_{1-δ} aufgetragen.

Der Vorteil ist eine außergewöhnlich hohe Stabilität gegen Oxidation der erfindungsgemäßen Bipolarplatte 1. Selbst bei einer dauerhaften Belastung von +3000 mV gegenüber einer Normalwasserstoffelektrode wird in schwefelsaurer Lösung, welche einen pH-Wert von 3 aufweist, keine Widerstandserhöhung festgestellt. Von besonderem Vorteil scheint zu sein, wenn sich im Betrieb einer Brennstoffzelle eine Deckschicht 3a der Zusammensetzung (Ti_{0.9} Nb_{0.1} Ir_{y})N_{1-φ} O_{φ} ausbildet, die eine vergleichsweise hohe Restleitfähigkeit besitzt und mit Iridium (Ir) unter hoher anodischer Belastung zu einem stabilen quaternären Mischoxid reagiert. Äußerlich bleibt die freie Oberfläche 30 der Deckschicht 3a, somit die vom Substrat 2 abgewandt ausgebildete Fläche der Deckschicht 3a, selbst nach 50h Dauerbelastung bei +2000 mV im Vergleich zu einer Normalwasserstoffelektrode, silberglänzend. Selbst in einer Rasterelektronenmikroskop-Untersuchung sind keine sich durch die Dicke der Deckschicht 3a zum Substrat 2 hin erstreckenden oder das Substrat 2 erreichende Korrosionsspuren erkennbar.

Die Deckschicht 3a des zweiten Ausführungsbeispiels ist sowohl mittels der Sputtertechnik als auch mittels eines kathodischen ARC-Beschichtungsverfahren, auch Vakuumlichtbogenverdampfen genannt, applizierbar. Trotz einer höheren Dropletsanzahl, mit anderen Worten, einer im Vergleich zur Sputtertechnologie gesteigerten Metalltröpfchenanzahl, weist auch die im kathodischen ARC-Verfahren hergestellte Deckschicht 3a die vorteilhaften Eigenschaften hoher Korrosionsbeständigkeit bei zeitstabiler Oberflächenleitfähigkeit, der mittels der Sputtertechnik hergestellten erfindungsgemäßen Deckschicht 3a auf.

In einem dritten nicht erfindungsgemäßen Ausführungsbeispiel ist das Schichtsystem 3 auf einem Substrat 2 in Form eines strukturierten Edelstahllochblechs ausgebildet. Das Substrat 2 ist vor einer Auftragung eines Schichtsystems 3 in einem H₂SO₄/H₃PO₄-Bad elektrolytisch poliert worden. Nach Aufbringung einer einzelnen Unterlagenschicht in Form einer mehrere 1000 nm dicken Tantalcarbidschicht wird eine Deckschicht 3a in Form einer mehrere 100 nm dicken Iridiumcarbidschicht aufgebracht.

Der Vorteil der aus dem Tantalcarbid ausgebildeten Unterlagenschicht besteht nicht nur in ihrer außerordentlichen Korrosionsbeständigkeit sondern auch darin, dass sie keinen Wasserstoff aufnimmt und dem Substrat 2 somit als Wasserstoffbarriere dient. Dieses ist insbesondere von Vorteil, sofern Titan als Substratmaterial verwendet wird.

Das Schichtsystem 3 des dritten nicht erfindungsgemäßen Ausführungsbeispiels ist geeignet für einen Einsatz einer Elektrolysezelle zur Erzeugung von Wasserstoff bei Stromdichten i, die größer als 500 mA cm⁻² sind.

Der Vorteil der im Schichtsystem zwischenliegenden und/oder beidseitig geschlossenen Metalloidschicht bzw. der zweiten Unterlagenschicht, die im einfachsten Fall beispielsweise aus Titannitrid gebildet ist, ist ihr niedriger elektrischer Widerstand von 10-12 mΩ cm⁻². Ebenso kann die Deckschicht unter möglicher Widerstandserhöhung in einer nicht erfindungsgemäßen Ausführungsform auch ohne eine zweite Unterlagenschicht bzw. Metalloidschicht ausgebildet sein.

In Tabelle 1 sind beispielhaft einige Schichtsysteme mit ihren charakteristischen Werten dargestellt.

**Tabelle 1: Schichten und ausgewählte charakteristische Werte**

| | Schichtsystem/Schichtdicke | Oberflächen-widerstand | Korrosionsstrom bei 2000 mV Standardwasserstoffsäule in µA cm⁻² in wässriger schwefelsaurer Lösung (pH3) bei T=800 °C | Oxidationsstabilität bei 2000 mV gemessen als Veränderung des Oberflächenwiderstandes in mΩ cm⁻² |
|---|---|---|---|---|
| 1 | Gold / 3 µm (als Referenz) | 9 | > 100 Pittingstrom | 9 -10 |
| 2 | Ti / 0,5 µm | 8 | 0,001 | .12 |
| | TiN / 1 µm (Nb_{0.1}Ir_{0.9})C_{1-δ} / 10nm | | | |
| 3 | TiNb / 0,5 µm | 10 -11 | 0,001 | 10 -11 |
| | TiN / 1 µm (Nb_{0.1}Ir_{0.9})N_{1.05}/ 10nm | | | |
| 4 | TiNb / 0,1 µm | 7-8 | 0,01 | 4-6 |
| | IrC / 10 nm | | | |
| 5 | Ta / 0,05 µm | 10 | 0,001 | 17-18 |
| | TaC / 0,5 µm (Ta,Ir)C / 5 nm | | | |
| 6 | ZrB₂ / 0,3 µm (Zr_{0,3}Ir_{0,7})B_{2-δ} / 10 nm | 7 | Pittingreaktion nach 4h Belastung | |

In Tabelle 1 sind nur einige exemplarische Schichtsysteme dargestellt. Dabei ist das Beispiel 3 für den Einsatz in einer erfindungsgemäßen Polymerelektrolytbrennstoffzelle oder einem erfindungsgemäßen Elektrolyseur geeignet. Vorteilhafterweise weisen die Schichtsysteme bei einer anodischen Belastung von +2000 mV gegenüber Normalwasserstoffsäule in schwefelsaurer Lösung bei einer Temperatur mit einem Wert von 80 °C über mehrere Wochen keine Widerstandserhöhung auf. Die im Hochvakuum mittels eines Sputter- oder ARC-Verfahrens oder im Feinvakuum mittels PECVD-Verfahren (Plasmaunterstütztes chemisches Gasphasenabscheideverfahren) aufgebrachten Schichtsysteme waren nach dieser Belastungszeit teilweise dunkel verfärbt. Allerdings traten keine sichtbaren Korrosionserscheinungen oder signifikante Veränderungen der Oberflächenwiderstände auf.

### Bezugszeichenliste

- 1: Bipolarplatte
- 2: Substrat
- 3: Schichtsystem
- 3a: Deckschicht
- 4: Unterlagenschichtsystem
- 4a: erste Unterlagenschicht
- 4b: zweite Unterlagenschicht
- 30: freie Oberfläche

## Patentansprüche

1. Polymerelektrolytbrennstoffzelle oder Elektrolyseur, umfassend mindestens eine Bipolarplatte (1), wobei die Bipolarplatte umfassend ein metallisches Substrat (2) und ein zumindest in Teilbereichen der Oberfläche des Substrats (2) aufgebrachtes Schichtsystem (3) ausgebildet ist, wobei das Schichtsystem (3) umfassend eine Deckschicht (3a) und ein Unterlagenschichtsystem (4) ausgebildet ist, wobei das Unterlagenschichtsystem (4) mindestens eine erste Unterlagenschicht (4a) in Form einer metallischen Legierungsschicht umfassend die chemischen Elemente Titan und Niob aufweist, wobei das Unterlagenschichtsystem (4) eine zweite Unterlagenschicht (4b) aufweist umfassend mindestens ein chemisches Element aus der Gruppe Titan, Niob, Hafnium, Zirkonium, Tantal und weiterhin mindestens ein nichtmetallisches Element aus der Gruppe Stickstoff, Kohlenstoff, Bor, Fluor, und wobei die zweite Unterlagenschicht (4b) zwischen der ersten Unterlagenschicht (4a) und der Deckschicht (3a) angeordnet ist, wobei die Deckschicht (3a) aus einer homogenen oder heterogenen festen metallischen Lösung oder Verbindung besteht, die entweder ein erstes chemisches Element aus der Gruppe der Edelmetalle in Form von Iridium enthält und weiterhin zumindest ein weiteres nichtmetallisches chemisches Element enthält aus der Gruppe umfassend Stickstoff, Kohlenstoff, Bor, Fluor, Wasserstoff oder
ein erstes chemisches Element aus der Gruppe der Edelmetalle in Form von Iridium und ein zweites chemisches Element aus der Gruppe der Edelmetalle in Form von Ruthenium enthält und weiterhin zumindest ein weiteres nichtmetallisches chemisches Element enthält aus der Gruppe umfassend Stickstoff, Kohlenstoff, Bor, Fluor, Wasserstoff.

2. Polymerelektrolytbrennstoffzelle oder Elektrolyseur nach Anspruch 1, wobei die Deckschicht (3a) weiterhin mindestens ein Metall aus der IV. und/oder der V. Nebengruppe des Periodensystems der chemischen Elemente enthält.

3. Polymerelektrolytbrennstoffzelle oder Elektrolyseur nach einem der Ansprüche 1 oder 2, wobei das mindestens eine nichtmetallische chemische Element in einer Konzentration im Bereich von 0,1 At.-% bis 65 At.-% in der Deckschicht (3a) vorhanden ist.

4. Polymerelektrolytbrennstoffzelle oder Elektrolyseur nach einem der Ansprüche 1 bis 3, wobei die Deckschicht (3a)
a) mehr als 35 At.-% Iridium und weiterhin Kohlenstoff umfasst; oder
b) mehr als 35 At.-% Iridium und weiterhin Kohlenstoff und in Spuren Wasserstoff umfasst;
oder
c) mehr als 35 At.-% Iridium und weiterhin Kohlenstoff und Fluor, optional weiterhin in Spuren Wasserstoff, umfasst; oder
d) in Summe mehr als 35 At.-% Iridium und Ruthenium und weiterhin Kohlenstoff umfasst; oder
e) in Summe mehr als 35 At.-% Iridium und Ruthenium und weiterhin Kohlenstoff und in Spuren Wasserstoff umfasst; oder
f) in Summe mehr als 35 At.-% Iridium und Ruthenium und weiterhin Kohlenstoff und Fluor, optional weiterhin in Spuren Wasserstoff, umfasst.

5. Polymerelektrolytbrennstoffzelle oder Elektrolyseur nach einem der vorherigen Ansprüche, wobei die Deckschicht (3a) weiterhin mindestens ein chemisches Element aus der Gruppe der unedlen Metalle enthält.

6. Polymerelektrolytbrennstoffzelle oder Elektrolyseur nach Anspruch 5, wobei das mindestens eine chemische Element aus der Gruppe der unedlen Metalle Aluminium, Eisen, Nickel, Kobalt, Zink, Cer oder Zinn ist.

7. Polymerelektrolytbrennstoffzelle oder Elektrolyseur nach Anspruch 5 oder 6, wobei das mindestens eine weitere chemische Element aus der Gruppe der unedlen Metalle im Konzentrationsbereich von 0,01 bis 65 At.-%, insbesondere von 0,01 bis 5 At.-%, in der Deckschicht (3a) enthalten ist.

8. Polymerelektrolytbrennstoffzelle oder Elektrolyseur nach einem der vorherigen Ansprüche, wobei die Deckschicht (3a) weiterhin zumindest ein chemisches Element aus der Gruppe der Refraktärmetalle, insbesondere Titan und/oder Zirkonium und/oder Hafnium und/oder Niob und/oder Tantal, aufweist.

9. Polymerelektrolytbrennstoffzelle oder Elektrolyseur nach Anspruch 8, wobei das mindestens eine chemische Element aus der Gruppe der Refraktärmetalle im Konzentrationsbereich von 0,01 bis 65 At.-%, insbesondere von 0,01 bis 5 At.-%, in der Deckschicht (3a) enthalten ist.

10. Polymerelektrolytbrennstoffzelle oder Elektrolyseur nach den Ansprüchen 5 bis 9, wobei das mindestens eine chemische Element aus der Gruppe der unedlen Metalle in Form von Zinn und das mindestens eine chemische Element aus der Gruppe der Refraktärmetalle zusammen im Konzentrationsbereich von 0,01 bis 65 At.-% insbesondere von 0,01 bis 5 At.-%, in der Deckschicht (3a) enthalten sind.

11. Polymerelektrolytbrennstoffzelle oder Elektrolyseur nach einem der vorherigen Ansprüche, wobei die Deckschicht (3a) weiterhin mindestens ein zusätzliches chemisches Element aus der Gruppe der Edelmetalle umfassend Platin, Gold, Silber, Rhodium, Palladium, in einem Konzentrationsbereich von 0,01 bis 10 At.-% aufweist.

12. Polymerelektrolytbrennstoffzelle oder Elektrolyseur nach einem der vorherigen Ansprüche, wobei alle chemischen Elemente aus der Gruppe der Edelmetalle umfassend Platin, Gold, Silber, Rhodium, Palladium, und inklusive Iridium und Ruthenium, im Konzentrationsbereich von 35 bis 99 At.-% in der Deckschicht (3a) enthalten sind.

13. Polymerelektrolytbrennstoffzelle oder Elektrolyseur nach einem der vorherigen Ansprüche, wobei das nichtmetallische chemische Element Kohlenstoff im Konzentrationsbereich von 10 bis 25 At.-% in der Deckschicht (3a) enthalten ist.

14. Polymerelektrolytbrennstoffzelle oder Elektrolyseur nach einem der vorherigen Ansprüche, wobei die Deckschicht (3a) eine Schichtdicke von mindestens 1nm bis maximal 50 nm aufweist.

15. Polymerelektrolytbrennstoffzelle oder Elektrolyseur nach einem der Ansprüche 1 bis 14, wobei die zweite Unterlagenschicht (4b) bis zu 5 At.-% Sauerstoff enthält.

## Claims

1. A polymer electrolyte fuel cell or electrolyser, comprising at least one bipolar plate (1), wherein the bipolar plate comprises a metallic substrate (2) and a layer system (3) applied at least in partial areas of the surface of the substrate (2), wherein the layer system (3) is formed comprising a top layer (3a) and a base layer system (4), wherein the base layer system (4) has at least one first base layer (4a) in the form of a metallic alloy layer comprising the chemical elements titanium and niobium, wherein the base layer system (4) comprises a second base layer (4b) comprising at least one chemical element from the group consisting of titanium, niobium, hafnium, zirconium and tantalum and further comprising at least one non-metallic element from the group nitrogen, carbon, boron and fluorine, and wherein the second base layer (4b) is arranged between the first base layer (4a) and the top layer (3a), wherein the top layer (3a) consists of a homogeneous or heterogeneous solid metallic solution or compound that contains either a first chemical element from the group of noble metals in the form of iridium and further contains at least one further non-metallic chemical element from the group comprising nitrogen, carbon, boron, fluorine and hydrogen, or
contains a first chemical element from the group of noble metals in the form of iridium and a second chemical element from the group of noble metals in the form of ruthenium, and also contains at least one further non-metallic chemical element from the group comprising nitrogen, carbon, boron, fluorine and hydrogen.

2. The polymer electrolyte fuel cell or electrolyser according to claim 1, wherein the top layer (3a) further comprises at least one metal from Group IV and/or Group V of the periodic table of chemical elements.

3. The polymer electrolyte fuel cell or electrolyser according to either one of claims 1 or 2, wherein the at least one non-metallic chemical element is provided in the top layer (3a) in a concentration in the range from 0.1 at.% to 65 at.%.

4. The polymer electrolyte fuel cell or electrolyser according to any one of claims 1 to 3, wherein the top layer (3a)
a) comprises more than 35 at.% iridium and further comprises carbon; or
b) comprises more than 35 at.% iridium and further comprises carbon and traces of hydrogen;
or
c) comprises more than 35 at.% iridium and further comprises carbon and fluorine, optionally further comprising traces of hydrogen; or
d) comprises in total more than 35 at.% iridium and ruthenium and further comprises carbon; or
e) comprises in total more than 35 at.% iridium and ruthenium and further comprises carbon and traces of hydrogen; or
f) comprises in total more than 35 at.% iridium and ruthenium and further comprises carbon and fluorine, optionally further comprising traces of hydrogen.

5. The polymer electrolyte fuel cell or electrolyser according to any one of the preceding claims, wherein the top layer (3a) further contains at least one chemical element from the group of base metals.

6. The polymer electrolyte fuel cell or electrolyser according to claim 5, wherein the at least one chemical element from the group of base metals is aluminium, iron, nickel, cobalt, zinc, cerium or tin.

7. The polymer electrolyte fuel cell or electrolyser according to claim 5 or 6, wherein the at least one further chemical element from the group of base metals is contained in the top layer (3a) in the concentration range from 0.01 to 65 at.%, in particular from 0.01 to 5 at.%.

8. The polymer electrolyte fuel cell or electrolyser according to any one of the preceding claims, wherein the top layer (3a) further comprises at least one chemical element from the group of refractory metals, in particular titanium and/or zirconium and/or hafnium and/or niobium and/or tantalum.

9. The polymer electrolyte fuel cell or electrolyser according to claim 8, wherein the at least one chemical element from the group of refractory metals is contained in the top layer (3a) in the concentration range from 0.01 to 65 at.%, in particular from 0.01 to 5 at.%.

10. The polymer electrolyte fuel cell or electrolyser according to any one of claims 5 to 9, wherein the at least one chemical element from the group of base metals in the form of tin and the at least one chemical element from the group of refractory metals are contained in the top layer (3a) together in the concentration range from 0.01 to 65 at.%, in particular from 0.01 to 5 at.%.

11. The polymer electrolyte fuel cell or electrolyser according to any one of the preceding claims, wherein the top layer (3a) further has at least one additional chemical element from the group of noble metals comprising platinum, gold, silver, rhodium, palladium, in a concentration range from 0.01 to 10 at.%.

12. The polymer electrolyte fuel cell or electrolyser according to any one of the preceding claims, wherein all chemical elements from the group of noble metals comprising platinum, gold, silver, rhodium, palladium, and including iridium and ruthenium, are contained in the top layer (3a) in the concentration range from 35 to 99 at.%.

13. The polymer electrolyte fuel cell or electrolyser according to any one of the preceding claims, wherein the non-metallic chemical element carbon is contained in the top layer (3a) in the concentration range from 10 to 25 at.%.

14. The polymer electrolyte fuel cell or electrolyser according to any one of the preceding claims, wherein the top layer (3a) has a layer thickness of at least 1 nm to a maximum of 50 nm.

15. The polymer electrolyte fuel cell or electrolyser according to any one of claims 1 to 14, wherein the second base layer (4b) contains up to 5 at.% oxygen.

## Revendications

1. Pile à combustible à membrane électrolyte polymère ou électrolyseur, comprenant au moins une plaque bipolaire (1), la plaque bipolaire comprenant un substrat métallique (2) et un système de couches (3) appliqué au moins à certains endroits de la surface du substrat (2), le système de couches (3) comprenant une couche de recouvrement (3a) et un système de sous-couches (4), le système de sous-couches(4) présentant au moins une première sous-couche(4a) sous forme d'une couche d'alliage métallique comprenant les éléments chimiques titane et niobium, le système de sous-couches(4) présentant une seconde sous-couche(4b) comprenant au moins un élément chimique du groupe titane, niobium, hafnium, zirconium, tantale et en outre au moins un élément non métallique du groupe azote, carbone, bore, fluor, et la seconde sous-couche(4b) étant disposée entre la première sous-couche(4a) et la couche de recouvrement (3a), la couche de recouvrement (3a) étant constituée d'une solution ou d'un composé métallique solide homogène ou hétérogène qui contient soit un premier élément chimique du groupe des métaux précieux sous forme d'iridium et qui contient en outre au moins un autre élément chimique non métallique du groupe comprenant l'azote, le carbone, le bore, le fluor, l'hydrogène ou
un premier élément chimique du groupe des métaux précieux sous forme d'iridium et un second élément chimique du groupe des métaux précieux sous forme de ruthénium et qui contient en outre au moins un autre élément chimique non métallique du groupe comprenant l'azote, le carbone, le bore, le fluor, l'hydrogène.

2. Pile à combustible à membrane électrolyte polymère ou électrolyseur selon la revendication 1, dans laquelle la couche de recouvrement (3a) contient en outre au moins un métal du sous-groupe IV et/ou du sous-groupe V du tableau périodique des éléments chimiques.

3. Pile à combustible à membrane électrolyte polymère ou électrolyseur selon l'une quelconque des revendications 1 ou 2, dans laquelle ledit au moins un élément chimique non métallique est présent à une concentration s'inscrivant dans la plage de 0,1 en pourcentage atomique à 65 en pourcentage atomique dans la couche de recouvrement (3a).

4. Pile à combustible à membrane électrolyte polymère ou électrolyseur selon l'une quelconque des revendications 1 à 3, dans laquelle la couche de recouvrement (3a)
a) comprend plus de 35 en pourcentage atomique d'iridium et comprend en outre du carbone ; ou
b) comprend plus de 35 en pourcentage atomique d'iridium et comprend en outre du carbone et des traces d'hydrogène ;
ou
c) comprend plus de 35 en pourcentage atomique d'iridium et comprend en outre du carbone et du fluor, éventuellement en outre des traces d'hydrogène ; ou
d) comprend, au total, plus de 35 en pourcentage atomique d'iridium et de ruthénium et en outre du carbone ; ou
e) comprend, au total, plus de 35 en pourcentage atomique d'iridium et de ruthénium et en outre du carbone et des traces d'hydrogène ; ou
f) comprend au total plus de 35 en pourcentage atomique d'iridium et de ruthénium et en outre du carbone et du fluor, éventuellement en outre des traces d'hydrogène.

5. Pile à combustible à membrane électrolyte polymère ou électrolyseur selon l'une quelconque des revendications précédentes, dans laquelle la couche de recouvrement (3a) contient en outre au moins un élément chimique du groupe des métaux communs.

6. Pile à combustible à membrane électrolyte polymère ou électrolyseur selon la revendication 5, **caractérisée en ce que** l'au moins un élément chimique du groupe des métaux communs est l'aluminium, le fer, le nickel, le cobalt, le zinc, le cérium ou l'étain.

7. Pile à combustible à membrane électrolyte polymère ou électrolyseur selon la revendication 5 ou 6, dans laquelle l'au moins un autre élément chimique du groupe des métaux communs est contenu dans la couche de recouvrement (3a) dans la plage de concentration de 0,01 à 65 en pourcentage atomique, en particulier de 0,01 à 5 en pourcentage atomique.

8. Pile à combustible à membrane électrolyte polymère ou électrolyseur selon l'une quelconque des revendications précédentes, dans laquelle la couche de recouvrement (3a) comprend en outre au moins un élément chimique du groupe des métaux réfractaires, en particulier le titane et/ou le zirconium et/ou le hafnium et/ou le niobium et/ou le tantale.

9. Pile à combustible à membrane électrolyte polymère ou électrolyseur selon la revendication 8, dans laquelle l'au moins un élément chimique du groupe des métaux réfractaires est contenu dans la couche de recouvrement (3a) dans la plage de concentration de 0,01 à 65 en pourcentage atomique, en particulier de 0,01 à 5 en pourcentage atomique.

10. Pile à combustible à membrane électrolyte polymère ou électrolyseur selon les revendications 5 à 9, dans laquelle l'au moins un élément chimique du groupe des métaux communs sous forme d'étain et l'au moins un élément chimique du groupe des métaux réfractaires sont contenus ensemble dans la couche de recouvrement (3a) dans la plage de concentration de 0,01 à 65 en pourcentage atomique en particulier de 0,01 à 5 en pourcentage atomique.

11. Pile à combustible à membrane électrolyte polymère ou électrolyseur selon l'une quelconque des revendications précédentes, dans laquelle la couche de recouvrement (3a) comprend en outre au moins un élément chimique supplémentaire du groupe des métaux nobles comprenant le platine, l'or, l'argent, le rhodium, le palladium, dans une plage de concentration de 0,01 à 10 en pourcentage atomique.

12. Pile à combustible à membrane électrolyte polymère ou électrolyseur selon l'une quelconque des revendications précédentes, dans laquelle tous les éléments chimiques du groupe des métaux nobles comprenant le platine, l'or, l'argent, le rhodium, le palladium, et y compris l'iridium et le ruthénium, sont contenus dans la plage de concentration de 35 à 99 en pourcentage atomique dans la couche de recouvrement (3a).

13. Pile à combustible à membrane électrolyte polymère ou électrolyseur selon l'une quelconque des revendications précédentes, dans laquelle l'élément chimique non métallique carbone est contenu dans la plage de concentration de 10 à 25 en pourcentage atomique dans la couche de recouvrement (3a).

14. Pile à combustible à membrane électrolyte polymère ou électrolyseur selon l'une quelconque des revendications précédentes, dans laquelle la couche de recouvrement (3a) présente une épaisseur de couche d'au moins 1 nm et de 50 nm maximum.

15. Pile à combustible à membrane électrolyte polymère ou électrolyseur selon l'une quelconque des revendications 1 à 14, dans laquelle la seconde sous-couche (4b) contient jusqu'à 5 en pourcentage atomique d'oxygène.
